# EUROPEAN PATENT APPLICATION

(11) **EP 4 336 919 A1**
(43) Date of publication of application: **13.03.2024**
(21) Application number: 22798901.9
(22) Date of filing: 26.04.2022
(51) Int. Cl.: H04W 68/12, H04W 4/00, H04W 88/06

(54) **COMMUNICATION DEVICE AND COMMUNICATION METHOD**

(30) Priority: 07.05.2021 JP 2021079080
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya- city, Aichi 4488661 (JP); TAKAHASHI, Hideaki, Kariya-city, Aichi 4488661 (JP)
(74) Representative: TBK
(86) International application number: PCT/JP2022/018976
(87) International publication number: WO 2022/234795

(57) **Abstract**

A communication apparatus (100) configured to communicate with a plurality of networks (200A, 200B) by a plurality of subscriber identity modules (111, 112) comprises: a controller (130) configured to include capability information indicating capability of the communication apparatus regarding a paging cause in a registration request message; and a transmitter (122) configured to transmit the registration request message including the capability information to a certain network (200B) included in the plurality of networks.

## Description

### Cross-Reference to Related Applications

This application is based on and claims the benefit of priority of Japanese Patent Application No. 2021-079080, filed on May 7, 2021, the entire contents of which are incorporated herein by reference.

### Technical Field

The present disclosure relates to a communication apparatus, and a communication method used in a mobile communication system.

### Background Art

In Release 17 of 3GPP (registered trademark. The same applies hereinafter) (3rd Generation Partnership Project), which is a mobile communication system standardization project, a work item has been launched for designing a function for a communication apparatus equipped with a plurality of subscriber identification modules to perform data communication while existing in networks of a plurality of communication operators.

Currently, a mechanism in which communication apparatuses existing in a plurality of networks receive paging (that is, incoming call) is not specified in the standard specification, and depends on the implementation of the communication apparatus. However, when an incoming call is received from one network (hereinafter, "first network") during communication with another network (hereinafter, "second network"), the communication apparatus overlooks the incoming call. Thus, methods of receiving incoming calls from a plurality of networks in cooperation with each network have been studied in the field of 3GPP standardization (for example, refer to Non Patent Literature 1).

When receiving paging from the second network during communication with the first network, the communication apparatus is assumed to determine whether or not to prioritize the communication with the first network over communication with the second network on the basis of information indicating a cause for paging (hereinafter, paging cause information). The paging cause information is included in a message for notifying paging (hereinafter, paging message). The communication apparatus can grasp the paging cause by receiving the paging message.

For example, when determining to prioritize the communication with the first network over the communication with the second network, the communication apparatus transmits a NAS message to a mobility management apparatus of the second network to notify that the call from the second network cannot be responded. The mobility management apparatus controls paging according to the NAS message (for example, stop paging).

### Citation List

### Non Patent Literature

Non Patent Literature 1: 3GPP Technical Report: TR 23.761 V1.4.0

### Summary of Invention

A communication apparatus according to a first aspect is the communication apparatus to communicate with a plurality of networks by a plurality of subscriber identity modules. The communication apparatus comprises: a controller configured to include capability information indicating capability of the communication apparatus regarding a paging cause in a registration request message; and a transmitter configured to transmit the registration request message including the capability information to a certain network included in the plurality of networks.

A communication method according to a second aspect is the communication method executed by a communication apparatus to communicate with a plurality of networks by a plurality of subscriber identity modules. The communication method comprises the steps of: including capability information indicating capability of the communication apparatus regarding a paging cause in a registration request message; and transmitting the registration request message including the capability information to a certain network included in the plurality of networks.

A communication method according to a third aspect is the communication method executed by a mobility management apparatus of a certain network included in the plurality of networks. The communication method comprises the steps of: receiving, from a communication apparatus configured to communicate with a plurality of networks by a plurality of subscriber identity modules, a registration request message including capability information indicating a capability of the communication apparatus regarding a paging cause; and transmitting a message for transmitting a paging message from a base station of the network to the communication apparatus to the base station on a basis of the capability information, the message including information indicating a cause of the paging message.

### Brief Description of Drawings

Objects, features, advantages, and the like of the present disclosure will become more apparent from the following detailed description with reference to the accompanying drawings.
Fig. 1 is a diagram illustrating a configuration example of a mobile communication system according to an embodiment.
Fig. 2 is a diagram illustrating a configuration example of a protocol stack of the mobile communication system according to the embodiment.
Fig. 3 is a diagram illustrating a configuration example of a UE (user equipment) according to the embodiment.
Fig. 4 is a diagram illustrating a configuration example of a base station according to the embodiment.
Fig. 5 is a diagram illustrating a first operation example of the embodiment.
Fig. 6 is a diagram illustrating a second operation example of the embodiment.

### Description of Embodiments

A mobile communication system according to an embodiment will be described with reference to the drawings. In the description of the drawings, the same or similar parts are denoted by the same or similar reference numerals.

In existing base stations, transmitting the paging cause information to the communication apparatus is not supported. Therefore, it is assumed that the communication apparatus exists in a cell that does not support transmitting the paging cause information (hereinafter, referred to as a non-support cell as appropriate).

Here, there is a possibility that the mobility management apparatus operates on a premise that the communication apparatus exists in a cell supporting transmission of the paging cause information to the communication apparatus although the communication apparatus exists in the non-support cell. As a result, there is a concern that the mobility management apparatus cannot appropriately control the communication apparatus existing in the non-support cell.

Therefore, an object of the present invention is to provide a communication apparatus and a communication method capable of performing appropriate control by a mobility management apparatus that controls notification of paging.

### [Embodiment]

### (System configuration)

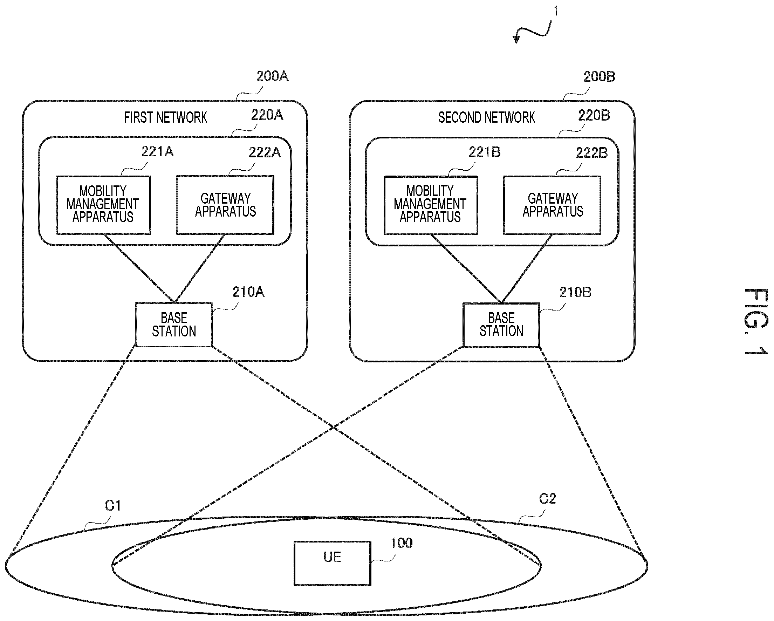

A configuration of a mobile communication system 1 according to the embodiment will be described with reference to Fig. 1. Hereinafter, an example in which a mobile communication system 1 is a fifth generation system (5G/NR: New Radio) in the 3GPP standard will be mainly described, but a fourth generation system (4G/LTE: Long Term Evolution) system and/or a sixth generation system may be at least partially applied to the mobile communication system 1.

As illustrated in Fig. 1, the mobile communication system 1 according to the embodiment includes a user equipment (UE (User Equipment)) 100, a first network 200A, and a second network 200B.

The UE 100 is an example of a communication apparatus. The UE 100 may be a mobile radio communication apparatus. The UE 100 may be an apparatus used by a user. For example, the UE 100 is a mobile phone terminal (including a smartphone), a tablet terminal, a laptop PC, a communication module (including a communication card or a chipset), a sensor or equipment provided in the sensor, a vehicle or equipment provided in the vehicle (for example, a vehicle UE), or an aerial vehicle or equipment provided in the aerial vehicle (for example, an aerial UE).

The UE 100 is a multi-SIM device corresponding to a plurality of subscriber identity modules (SIM (Subscriber Identity Module)). The UE 100 communicates with the plurality of networks by using a plurality of SIMs. Hereinafter, an example in which the UE 100 supports two SIMs will be mainly described; however, the UE 100 may support three or more SIMs. "Supporting a plurality of SIMs" means that the UE 100 has an ability to handle a plurality of SIMs, and the UE 100 may not be necessarily equipped with the plurality of SIMs. Such a UE 100 may be referred to as a "UE supporting a plurality of SIMs". Note that the SIM is not limited to a card type SIM (so-called a SIM card), and may be an embedded SIM (so-called an eSIM) that is integrated in the UE 100 in advance. The SIM may be referred to as a USIM (Universal Subscriber Identity Module).

The first network 200Ais a network associated with one SIM of the UE 100. The second network 200B is a network associated with the other SIM of the UE 100. It is assumed that the UE 100 has performed location registration in the first network 200A using one SIM and performed location registration in the second network 200B using the other SIM. That is, the UE 100 exists in each of the first network 200A and the second network 200B. The first network 200A and the second network 200B may be networks of different communication operators. However, the first network 200A and the second network 200B may be networks of the same communication operators. Different PLMN (Public Land Mobile Network) IDs may be allocated to the first network 200A and the second network 200B.

The first network 200A includes a base station 210A constituting a radio access network and a core network 220A. The core network 220A includes a mobility management apparatus 221A and a gateway apparatus 222A. Similarly, the second network 200B includes a base station 210B constituting a radio access network and a core network 220B. The core network 220B includes a mobility management apparatus 221B and a gateway apparatus 222B. Hereinafter, the base stations 210A and 200B will be simply referred to as a base station 210 when they are not distinguished, the mobility management apparatuses 221A and 221B will be simply referred to as a mobility management apparatus 221 when they are not distinguished, and the gateway apparatuses 222A and 222B will be simply referred to as a gateway apparatus 222 when they are not distinguished.

The base station 210 is a radio communication apparatus that performs radio communication with the UE 100. The base station 210 manages one or a plurality of cells. The base station 210 performs radio communication with the UE 100 that has established a connection with its cell in a radio resource control (RRC) layer. The base station 210 has a radio resource management (RRM) function, a routing function of user data (hereinafter, simply referred to as "data"), a measurement control function for mobility control and scheduling, and the like. The "cell" is used as a term indicating a minimum unit of a radio communication area. The "cell" is also used as a term indicating a function or a resource that performs radio communication with the UE 100. One cell belongs to one carrier frequency. Fig. 1 illustrates an example in which the base station 210A manages a cell C1 and the base station 210B manages a cell C2. The UE 100 is located in an overlapping region of the cell C1 and the cell C2.

The base station 210 may be a gNB, which is a 5G/NR base station, or an eNB, which is a 4G/LTE base station. Hereinafter, an example in which the base station 210 is a gNB will be mainly described. The function of the base station 210 may be divided into a CU (Central Unit) and a DU (Distributed Unit). The base station 210 may be a relay node such as an IAB (Integrated Access and Backhaul) node.

The mobility management apparatus 221 is an apparatus supporting a control plane, and is an apparatus that performs various mobility management for the UE 100. The mobility management apparatus 221 communicates with the UE 100 using NAS (Non-Access Stratum) signaling and manages information on a tracking area in which the UE 100 exists. The mobility management apparatus 221 performs paging through the base station 210 to notify the UE 100 of an incoming call. The mobility management apparatus 221 may be an AMF (Access and Mobility Management Function) in 5G/NR or a MME (Mobility Management Entity) in 4G/LTE.

The gateway apparatus 222 is an apparatus supporting a user plane and performs transfer control of data of the UE 100. The gateway apparatus 222 may be a UPF (User Plane Function) in 5G/NR or a S-GW (Serving Gateway) in 4G/LTE.

### (Configuration example of protocol stack)

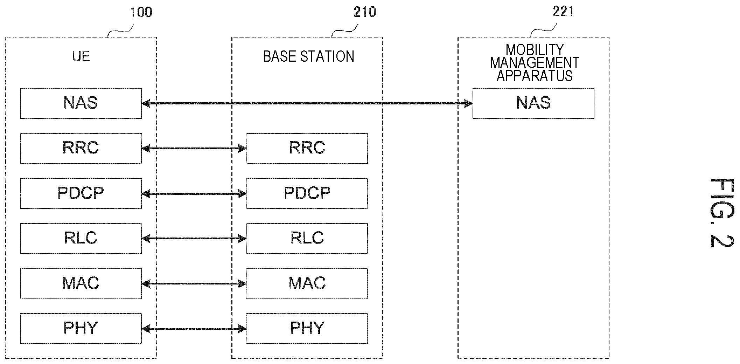

A configuration example of a protocol stack of the mobile communication system 1 will be described with reference to Fig. 2. As illustrated in Fig. 2, a protocol of a radio section between the UE 100 and the base station 210 includes a physical (PHY) layer, a MAC (Medium Access Control) layer, a RLC (Radio Link Control) layer, a PDCP (Packet Data Convergence Protocol) layer, and a RRC (Radio Resource Control) layer.

The PHY layer performs encoding/decoding, modulation/demodulation, antenna mapping/demapping, and resource mapping/demapping. Data and control information are transmitted via a physical channel between the PHY layer of the UE 100 and the PHY layer of the base station 210.

The MAC layer performs data priority control, retransmission processing by hybrid ARQ (HARQ), a random access procedure, and the like. Data and control information are transmitted via a transport channel between the MAC layer of the UE 100 and the MAC layer of the base station 210. The MAC layer of the base station 210 includes a scheduler. The scheduler determines uplink and downlink transport formats (transport block size, modulation and coding scheme (MCS)) and allocated resources to the UE 100.

The RLC layer transmits data to the RLC layer on the reception side using the functions of the MAC layer and the PHY layer. Data and control information are transmitted via a logical channel between the RLC layer of the UE 100 and the RLC layer of the base station 210.

The PDCP layer performs header compression/decompression and encryption/decryption.

A SDAP (Service Data Adaptation Protocol) layer may be provided as an upper layer of the PDCP layer. The SDAP (Service Data Adaptation Protocol) layer performs mapping between an IP flow, a unit in which a core network performs QoS control, and a radio bearer, a unit in which an AS (Access Stratum) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 210. In a case where there is an RRC connection between the RRC of the UE 100 and the RRC of the base station 210, the UE 100 is in an RRC connected state. In a case where there is no RRC connection between the RRC of the UE 100 and the RRC of the base station 210, the UE 100 is in an RRC idle state. In a case where the RRC connection between the RRC of the UE 100 and the RRC of the base station 210 is suspended, the UE 100 is in an RRC inactive state.

The NAS layer located above the RRC layer performs session management and mobility management of the UE 100. NAS signaling is transmitted between the NAS layer of the UE 100 and the NAS layer of the mobility management apparatus 221.

Note that the UE 100 has an application layer and the like in addition to the protocol of the radio interface.

### (Outline of selection operation)

The UE 100 can perform cell selection operation or cell reselection operation as selection operation for selecting a camp-on-cell. For example, the UE 100 can perform the selection operation in any of the following cases.
·A case where a new PLMN or a new SNPN (Stand-alone Non-Public Network) is selected
·A case where a USIM is inserted or an SNPN subscription is added to the UE 100
·A case where an appropriate cell (suitable cell) is not found
·A case where the RRC connected state transitions to the RRC idle state or RRC inactive state

### (A) Cell selection operation

In the cell selection operation, the UE 100 searches a frequency band to identify the strongest cell for each frequency (for example, a cell having the highest detection level of a CD-SSB (cell-defining SS ( Synchronization Signal)/ PBCH Block), a cell having the largest received power (RSRP:Reference Signal Received Power) of the CD-SSB, or a cell having the highest received quality (RSRQ:Reference Signal Received Quality) of the CD-SSB). Next, the UE 100 identifies an appropriate cell from among the strongest cells. If the UE 100 cannot identify the appropriate cell (that is, cannot find the appropriate cell), it identifies an acceptable cell. If the UE 100 can identify the appropriate cell (that is, can find the appropriate cell), it identifies the appropriate cell as a camp-on-cell. If the UE 100 can identify only the acceptable cell (that is, can find the acceptable cell), it selects the acceptable cell as the camp-on-cell.

Note that the appropriate cell is a cell in which the measured radio quality of the cell satisfies a cell selection criterion. The PLMN of the appropriate cell is a selected PLMN, a registered PLMN, or a PLMN equivalent to these PLMNs. The appropriate cell is not a prohibited or reserved cell and is not part of a tracking area included in a list of "prohibited tracking areas for roaming". The acceptable cell is a cell in which the measured radio quality of the cell satisfies the cell selection criterion, and is not the prohibited cell.

The cell selection criterion is, for example, Srxlev > 0 and Squal > 0. Srxlev represents cell selection received power. Srxlev is calculated by Srxlev = Qᵣₓₗₑᵥₘₑₐₛ - (Qᵣₓₗₑᵥₘᵢₙ + Q_{rxlevminoffset}) - P_{compensation} - Qoffsetₜₑₘₚ. Qᵣₓₗₑᵥₘₑₐₛ is a measured received power (RSRP) of the cell. Qᵣₓₗₑᵥₘᵢₙ is the minimum required received power. Q_{rxlevminoffset} is a predetermined offset that is constantly applied. P_{compensation} is a parameter related to an uplink capability. Qoffsetₜₑₘₚ is an offset that is temporarily applied. Squal represents a cell selection quality level. Squal is calculated by Squal = Qqualmeas - (Qqualmin + Qqualminoffset) - Qoffsetₜₑₘₚ. Q_{qualmeas} is a measured quality level (RSRQ) of the cell. Q_{qualmin} is the minimum required quality level. Q_{qualminoffset} is a predetermined offset that is constantly applied. Qoffsetₜₑₘₚ is an offset that is temporarily applied.

### (B) Cell reselection operation

In the cell reselection operation, the UE 100 measures the radio quality of a serving cell and a neighboring cell. The UE 100 selects a camp-on-cell to be used as the serving cell, for example, based on the following criteria. The UE 100 determines the priority of the cell to be selected according to the priority of frequencies. The UE 100 may select the camp-on-cell based on the following criteria when 1 second or more passes after camping on the current serving cell.

(B 1) The priority of the frequency of the neighboring cell is higher than the priority of the frequency of the current serving cell:
The UE 100 selects a cell that satisfies the relationship of Squal > Thresh_{X}, _{HighQ} over a predetermined period (for example, Treselection_{RAT}) or a cell that satisfies the relationship of Srxlev > Thresh_{X}, _{HighP} over a predetermined period. Each of Thresh_{X}, _{HighP} and Thresh_{X}, _{HighQ} is a predetermined threshold.

(B2) The priority of the frequency of the neighboring cell is the same as the priority of the frequency of the current serving cell:
The UE 100 calculates a ranking Rs of the current serving cell and a ranking Rn of the neighboring cell. The UE 100 selects a cell having a ranking Rn higher than Rs over a predetermined period as the camp-on-cell.

Rs is calculated by Rs = Qₘₑₐₛ, ₛ + Q_{hyst} - Qoffsetₜₑₘₚ. Rn is calculated by Rn = Qₘₑₐₛ, ₙ - Qoffset - Qoffsetₜₑₘₚ. Qₘₑₐₛ, ₛ is received power (RSRP) of the current serving cell. Q_{meas, n} is received power (RSRP) of the neighboring cell. Q_{hyst} is a hysteresis value used to facilitate the reselection of the current serving cell. Qoffsetₜₑₘₚ is an offset that is temporarily applied.

(B3) The priority of the frequency of the neighboring cell is lower than the priority of the frequency of the current serving cell:
The UE 100 selects a cell that satisfies the relationship of Squal < Threshx, _{LowQ} over a predetermined period or a cell that satisfies the relationship of Srxlev >Threshx, _{LowP} over a predetermined period under the assumption that the serving cell satisfies the relationship of Squal < Thresh_{Serving}, _{LowQ} or Srxlev < Thresh_{Serving}, _{LowP} over a predetermined period. Each of Thresh_{X}, _{LowP} and Thresh_{X}, _{LowQ} is a predetermined threshold.

Various parameters used for the cell selection are included in information broadcast from the base station 210 (SIB (System Information Block)). The various parameters include the priority of frequencies (for example, cellReselectionPriority, cellReselectionSubPriority), a predetermined period (Treselection_{RAT}), various offsets (Qqualminoffset, Q_{rxlevminoffset}, Q_{offsettemp}, Q_{hyst}, Qoffset), and various thresholds (Threshx, _{HighQ}, Threshx, _{HighP}, Thresh_{Serving}, _{LowQ}, Thresh_{Serving}, _{LowP}, Threshx, _{LowP}, Threshx, _{LowQ}). cellReselectionPriority indicates the frequency priority in eight stages, and cellReselectionSubPriority indicates the frequency sub-priority in four stages. As a result, a maximum of 32 priorities of frequency can be configured in the UE 100. The priority of frequencies may be sent to the UE 100 as an RRC release message. In the priority of frequencies sent as the RRC release message, the priorities of a plurality of frequencies can be designated in a list format. The priority of this frequency is prioritized over the priority of a frequency to be broadcast. The UE 100 performs the selection operation for selecting the camp-on-cell based on the information received from the base station 210.

Note that the RRC release message may include carrier information designating the frequency (what is called, redirectedCarrierInfo). The carrier information is prioritized over the priority of frequencies. The UE 100 preferentially selects the cell belonging to the frequency designated by the carrier information regardless of the priority of frequencies.

### (Configuration example of UE)

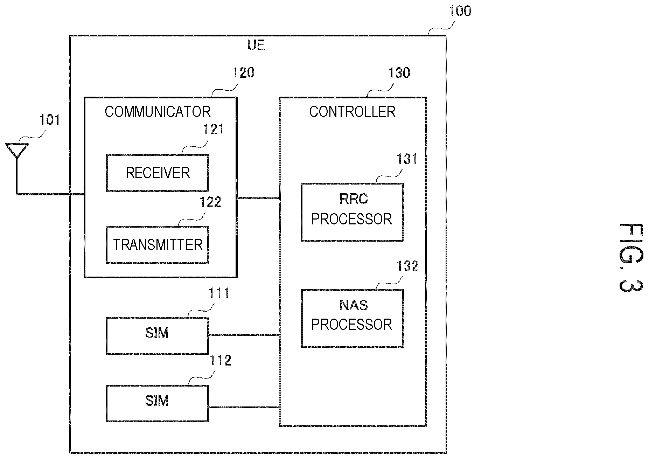

A configuration example of the UE 100 will be described with reference to Figs. 3. As illustrated in Fig. 3, the UE 100 includes an antenna 101, a SIM 111, a SIM 112, a communicator 120, and a controller 130. The antenna 101 may be provided outside the UE 100. The SIM 111 and the SIM 112 are SIM cards or eSIMs.

The SIM 111 stores subscriber information and configuration information necessary for the UE 100 to communicate with the first network 200A. The SIM 111 stores identification information of the UE 100 in the first network 200A, for example, a telephone number, an IMSI (International Mobile Subscriber Identity), and the like.

The SIM 112 stores subscriber information and configuration information necessary for the UE 100 to communicate with the second network 200B. The SIM 112 stores identification information of the UE 100 in the second network 200B, for example, a telephone number, an IMSI, and the like.

The communicator 120 performs radio communication with the first network 200A and radio communication with the second network 200B via the antenna 101 under the control of the controller 130. The communicator 120 may include only one receiver (RX: Receiver) 121. In this case, the communicator 120 cannot simultaneously perform reception from a first network 200A and reception from a second network 200B. The communicator 120 may include only one transmitter (TX: Transmitter) 122. However, the communicator 120 may include a plurality of transmitters 122. The receiver 121 converts a radio signal received by the antenna 101 into a reception signal that is a baseband signal, performs signal processing on the reception signal, and outputs the reception signal to the controller 130. The transmitter 122 performs signal processing on a transmission signal that is a baseband signal output by the controller 130, converts the transmission signal into a radio signal, and transmits the radio signal from the antenna 101.

The controller 130 controls the communicator 120 and performs various types of control in the UE 100. The controller 130 controls communication with the first network 200A using the SIM 111 and controls communication with the second network 200B using the SIM 112. The controller 130 includes at least one processor and at least one memory. The memory stores a program executed by the processor and information used for processing by the processor. The memory may include at least one of a ROM (Read Only Memory), an EPROM (Erasable Programmable Read Only Memory), an EEPROM (Electrically Erasable Programmable Read Only Memory), a RAM (Random Access Memory), and a flash memory. The processor may include a digital signal processor (DSP) that performs digital processing on a digital signal and a central processing unit (CPU) that executes a program. Note that a part of the memory may be provided in the communicator 120. In addition, the DSP may be provided in the communicator 120.

The controller 130 includes a RRC processor 131 and a NAS processor 132. The RRC processor 131 performs processing in the processing of the RRC layer. The NAS processor 132 performs processing in the processing of the NAS layer, which is a layer higher than the RRC layer. Note that the RRC processor 131 and the NAS processor 132 may be configured by one processor or may be configured by a plurality of processors.

The UE 100 configured as described above communicates with the first network 200A by using the SIM 111, and communicates with the second network 200B by using the SIM 112. The controller 130 monitors a paging message notifying paging from a cell managed by the base station 210B of the second network 200B during the communication with the first network 200A. In a case where the cell does not support transmission of paging cause information indicating a cause for paging by the paging message, the communicator 120 transmits, to the mobility management apparatus 221B of the second network 200B, a NAS message indicating that the UE 100 exists in a non-support cell that does not support the transmission of the paging cause information. As a result, the mobility management apparatus 221B can grasp that the UE 100 exists in the non-support cell. As a result, since the mobility management apparatus 221B does not operate on a premise that the UE 100 exists in the support cell, it is possible to appropriately control the UE 100 existing in the non-support cell.

In addition, the controller 130 may include an RRC processor 131 that performs processing in a radio resource control (RRC) layer, and a NAS processor 132 that performs processing in a non-access stratum (NAS) layer that is a layer higher than the RRC layer. The RRC processor 131 may execute processing of providing the NAS processor 132 with support information indicating whether or not the cell supports the transmission of the paging cause information on the basis of the RRC message from the base station 210B. The NAS processor 132 may execute processing of transmitting the NAS message to the mobility management apparatus 221B by the communicator 120 according to the support information from the RRC processor 131. As a result, the NAS processor 132, which executes the processing of transmitting the NAS message to the mobility management apparatus 221B, can grasp whether or not the cell in which the UE 100 exists supports the transmission of the paging cause information. As a result, the mobility management apparatus 221B can appropriately control the UE 100 existing in the non-support cell.

In addition, the RRC message may be a paging message. As a result, when paging addressed to the UE 100 actually occurs, the NAS processor 132 can grasp whether or not the cell in which the UE 100 exists supports the transmission of the paging cause information.

When the identifier (ID) of the UE 100 and the paging cause information associated with the identifier are included in the paging message, the RRC processor 131 may provide support information indicating that the cell supports the transmission of the paging cause information to the NAS processor 132. As a result, the NAS processor 132 can grasp whether or not the cell in which the UE 100 exists supports the transmission of the paging cause information without complicating the configuration of the paging message.

The RRC message may be a system information block (SIB) message broadcast from the cell. As a result, for example, the UE 100 can grasp whether or not the cell in which the UE 100 exists supports the transmission of the paging cause information in advance, before receiving the paging message addressed to the UE 100. As a result, the UE 100 transmits the NAS message to the mobility management apparatus 221B before the paging message occurs, so that the mobility management apparatus 221B can grasp that the UE 100 exists in the non-support cell.

The NAS message may be at least one of a service request message for transitioning the mode in the NAS layer from an idle mode to a connected mode and a registration request message for initial registration or registration update of the UE 100 to the second network 200B. As a result, the mobility management apparatus 221B can grasp that the UE 100 exists in the non-support cell by the existing message, and can reduce the influence on the system. In addition, in a case where the NAS message is the registration request message, the mobility management apparatus 221B can grasp that the UE 100 exists in the non-support cell at the time of registration or registration update of the UE 100.

Note that an operation of a functional unit (specifically, at least one of the antenna 101, the SIM 111, the SIM 112, the communicator 120, and the controller 130 (the RRC processor 131 and the NAS processor 132)) included in the UE 100 may be described as the operation of the UE 100.

### (Configuration example of base station)

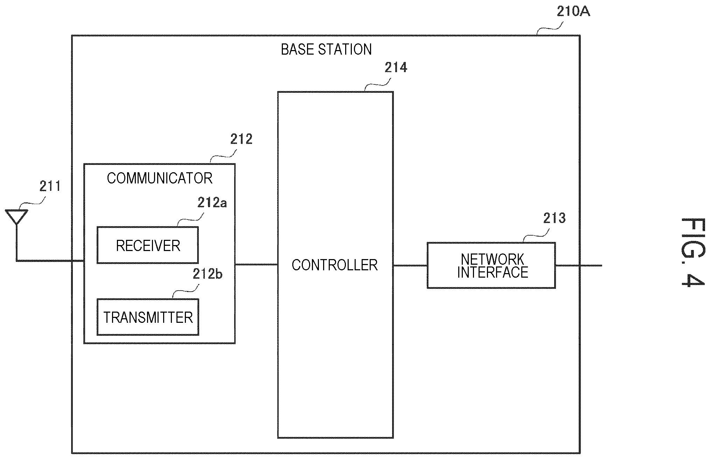

A configuration example of the base station 210A of the first network 200A will be described with reference to Fig. 4. Since the base station 210B of the second network 200B also has the same configuration as the base station 210A, the description thereof will be omitted. As illustrated in Fig. 4, the base station 210A includes an antenna 211, a communicator 212, a network communicator 213, and a controller 214.

The communicator 212 performs communication with the UE 100 via the antenna 211 under the control of the controller 214. The communicator 212 includes a receiver 212a and a transmitter 212b. The receiver 212a converts a radio signal received by the antenna 211 into a reception signal that is a baseband signal, performs signal processing on the reception signal, and outputs the reception signal to the controller 214. The transmitter 212b performs signal processing on a transmission signal that is a baseband signal output by the controller 214, converts the transmission signal into a radio signal, and transmits the radio signal from the antenna 211.

The network communicator 213 is connected to the core network 220A. The network communicator 213 performs network communication with the mobility management apparatus 221A and the gateway apparatus 222A under the control of the controller 214.

The controller 214 controls the communicator 212 and performs various types of control in the base station 210A. The controller 214 includes at least one processor and at least one memory. The memory stores a program executed by the processor and information used for processing by the processor. The memory may include at least one of a ROM, an EPROM, an EEPROM, a RAM, and a flash memory. The processor may include a digital signal processor (DSP) that performs digital processing on a digital signal and a central processing unit (CPU) that executes a program. Note that a part of the memory may be provided in the communicator 212. In addition, the DSP may be provided in the communicator 212.

Note that an operation of a functional unit (specifically, at least one of the antenna 211, the communicator 212, the network communicator 213, and the controller 214) included in the base station 210A may be described as an operation of the base station 210A.

### (Operation of mobile communication system)

The operation of the mobile communication system 1 will be described.

### (1) First operation example

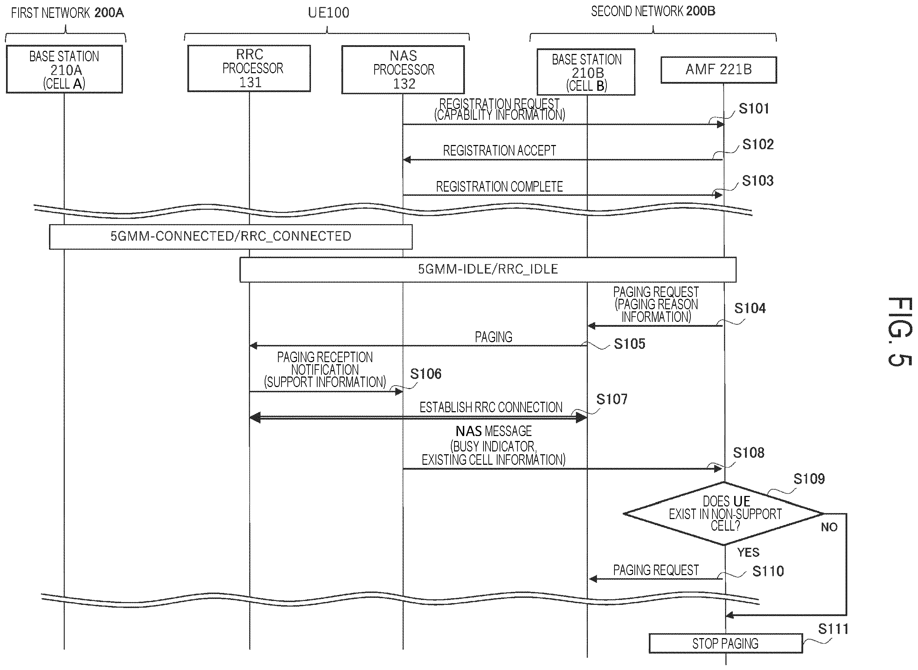

A first operation example of the mobile communication system 1 will be described with reference to Fig. 5. In the operation example illustrated in Fig. 5, the UE 100 exists in a cell C1 managed by the base station 210B of the first network 200A and exists in a cell C2 managed by the base station 210B of the second network 200B. Note that the description will be given assuming that the mobility management apparatus 221B of the second network 200B is an AMF.

Hereinafter, the RRC processor 131 and the NAS processor 132 communicate (specifically, transmission and reception/notification of messages and the like) with the second network 200B via the communicator 120, but for convenience of description, the description of the communication via the communicator 120 will be omitted as appropriate. In addition, an AMF 221B communicates (transmission and reception/notification of messages and the like) with the UE 100 (specifically, the NAS processor 132) via the base station 210B, but for convenience of description, the description of the communication via the base station 210B will be omitted as appropriate.

### Step S101:

The UE 100 and the second network 200B initiate a registration procedure. The UE 100 (NAS processor 132) transmits a registration request message to the AMF 221B. The AMF 221B receives the registration request message from the UE 100. The registration request message is a message for initial registration or registration update of the UE 100 to the second network 200B.

The NAS processor 132 may include capability information of the UE 100 in the registration request message. The capability information may be, for example, information indicating that the UE 100 can grasp the paging cause by the paging cause information. The capability information may be information indicating that the UE 100 can determine the communication to be prioritized on the basis of the paging cause information. As a result, the NAS processor 132 may transmit the capability information of the UE 100 to the second network 200B. The AMF 221B can grasp that the paging cause can be notified to the UE 100 on the basis of the capability information.

### Step S102:

The AMF 221B transmits a registration accept message to the UE 100. The NAS processor 132 of the UE 100 receives the registration accept message from the AMF 221B. The registration accept message is a message indicating that registration to the second network 200B or registration update has been approved.

### Step S103:

The NAS processor 132 transmits a registration complete message to the AMF 221B. The AMF 221B receives the registration complete message from the UE 100. The registration complete message is, for example, a message indicating that the process of registration to the second network 200B or registration update has been normally completed in the UE 100.

As illustrated in Fig. 5, thereafter, it is assumed that the state of the UE 100 in the RRC layer is in an RRC connected state with respect to the first network 200A and in an RRC idle state with respect to the second network 200B. The UE 100 is communicating with the first network 200A. For example, the UE 100 is provided with a service such as a voice call from the first network 200A. Therefore, the UE 100 is in an RRC idle state with respect to the second network 200B during the communication with the first network 200A.

Note that the mode in the NAS layer of the UE 100 is the connected mode with respect to the first network 200A and the idle mode with respect to the second network 200B. The mode in the NAS layer may be a 5GMM (5G Mobility Management) mode. In this mode, the connected mode may be a 5GMM-connected mode, and the idle mode may be a 5GMM-idle mode.

The controller 130 of the UE 100 monitors a paging message notifying paging from the cell C2 managed by the base station 210B of the second network 200B during the communication with the first network 200A.

### Step S104:

The AMF 221B transmits a paging request message addressed to the UE 100 to the base station 210B. The base station 210B receives the paging request message from the AMF 221.

The paging request message includes paging cause information indicating a cause for paging. The AMF 221B may include the paging cause information in the paging request message on the basis of the capability information from the UE 100. The paging cause information may indicate, for example, whether or not the cause for paging is a voice call.

### Step S105:

In response to the reception of the paging request message, the communicator 212 of the base station 210 transmits a paging message notifying paging addressed to the UE 100 to the UE 100. The RRC processor 131 of the UE 100 receives the paging message addressed to the UE 100 from the base station 210B.

The paging message is used for notification to one or more UEs 100. The paging message is a message in the RRC layer. The paging message includes, for example, an ID of the UE 100. More specifically, for example, the paging message includes a list of paging records, and one paging record in the list includes the ID of the UE 100. For example, the ID is the 5G-S-TMSI or the full I-RNTI (Inactive Radio Network Temporary Identifier) of the UE 100.

In a case where transmitting the paging cause information to the UE 100 is supported, the controller 130 of the base station 210B transmits the paging cause information to the UE 100. For example, the controller 130 of the base station 210B may associate the paging cause information with the ID of the UE 100 included in the paging message. The RRC processor 131 can grasp the cause for paging to the UE 100 on the basis of the paging cause information associated with the ID of the UE 100.

In addition, the communicator 212 of the base station 210B may associate the paging cause information for each paging record. The RRC processor 131 can grasp the cause for paging to the UE 100 on the basis of the paging cause information associated with the paging record including the ID of the UE 100.

In addition, the communicator 212 of the base station 210B may transmit the paging message for each paging cause. The communicator 212 of the base station 210B may transmit, for example, a first paging message for notifying paging with a paging cause that is a voice call and a second paging message for notifying paging with a paging cause that is not a voice call. The RRC processor 131 may grasp that the paging cause is a voice call by including the identifier of the UE 100 in the first paging message. The RRC processor 131 may grasp that the paging cause is a cause other than a voice call by including the identifier of the UE 100 in the second paging message.

In addition, the communicator 212 of the base station 210B may transmit downlink control information (DCI) including the paging cause information to the UE 100. The RRC processor 131 can grasp the cause for paging to the UE 100 on the basis of the paging cause information included in the downlink control information.

The RRC processor 131 may determine that the cell C2 in which the UE 100 exists is a support cell that supports the transmission of the paging cause information by acquiring the paging cause information. In addition, the RRC processor 131 may determine that the cell C2 in which the UE 100 exists is the support cell when the paging cause can be grasped on the basis of the paging message or the downlink control information.

On the other hand, in a case where transmitting the paging cause information to the UE 100 is not supported, the base station 210B may not transmit the paging cause information to the UE 100. When the paging cause information is not included in the paging message, the RRC processor 131 may determine that the cell C2 in which the UE 100 exists is a non-support cell that does not support the transmission of the paging cause information. In addition, the RRC processor 131 may determine that the cell C2 in which the UE 100 exists is the non-support cell when the paging cause cannot be grasped on the basis of the paging message or the downlink control information.

In the present operation example, the description will be given assuming that transmitting the paging cause information to the UE 100 is not supported in the base station 210B. Therefore, the RRC processor 131 determines that the cell C2 in which the UE 100 exists is the non-support cell.

### Step S106:

The RRC processor 131 provides a paging reception notification to the NAS processor 132. The NAS processor 132 receives the paging reception notification. The paging reception notification is for notifying that the UE 100 has received paging. The RRC processor 131 may indicate to the NAS processor 132 that the paging message is received on the basis of the paging reception notification.

On the basis of the paging message, the RRC processor 131 provides the NAS processor 132 with support information indicating whether or not the cell C2 in which the UE 100 exists supports the transmission of the paging cause information.

When determining that the cell C2 is the support cell, the RRC processor 131 may provide support information indicating that the cell C2 supports the transmission of the paging cause information to the NAS processor 132. For example, when the ID of the UE 100 and the paging cause information associated with the ID of the UE 100 are included in the paging message, the RRC processor 131 may provide support information indicating that the cell C2 supports the transmission of the paging cause information to the NAS processor 132.

When determining that the cell C2 is the non-support cell, the RRC processor 131 may provide support information indicating that the cell C2 does not support the transmission of the paging cause information to the NAS processor 132. For example, when the paging cause information is not included in the paging message, the RRC processor 131 may provide support information indicating that the cell C2 does not support the transmission of the paging cause information to the NAS processor 132.

For example, the RRC processor 131 may provide paging cause information to the NAS processor 132 as the support information. The RRC processor 131 may provide support information indicating that the paging cause information is not included in the paging message to the NAS processor 132.

When determining that the cell C2 is the support cell, the RRC processor 131 may provide the paging cause information to the NAS processor 132. As a result, the NAS processor 132 can grasp the paging cause and may grasp that the cell C2 is the support cell. On the other hand, when determining that the cell C2 is the non-support cell, the RRC processor 131 may indicate the reception of the paging message to the NAS processor 132 without providing the paging cause information. The NAS processor 132 may grasp that the cell C2 is the non-support cell in response to the fact that the paging cause information is not provided.

In the present operation example, since transmitting the paging cause information to the UE 100 is not supported in the base station 210B, the description will be given assuming that the RRC processor 131 provides the NAS processor 132 with the support information indicating that the cell C2 does not support the transmission of the paging cause information.

The NAS processor 132 may determine a priority in response to the reception of the paging reception notification. The NAS processor 132 determines which of the communication with the first network 200A and the communication with the second network 200B corresponding to the paging is prioritized (or which is preferred).

For example, when receiving the paging cause information, the NAS processor 132 determines which of the communication with the first network 200A and the communication with the second network 200B corresponding to paging is prioritized on the basis of the paging cause indicated by the paging cause information. For example, when the cause for paging from the second network 200B is unknown, the NAS processor 132 may determine that the communication with the first network 200A is prioritized over the communication with the second network 200B.

### Step S107:

The RRC processor 131 executes processing of establishing an RRC connection. The RRC processor 131 may execute an RRC setup procedure or may execute an RRC re-establishment procedure. As a result, an RRC connection is established between the UE 100 and the base station 210B. As a result, the state of the UE 100 in the RRC layer transitions to the RRC connected state for the second network 200B. Note that, in a case where the UE 100 is in the RRC inactive state, the UE 100 may transition to the RRC connected state by executing the RRC resume procedure.

### Step S108:

The NAS processor 132 transmits, to the AMF 221B, a NAS message indicating that the UE 100 exists in the non-support cell. The AMF 221B receives the registration request message from the UE 100.

For example, the NAS processor 132 transmits the NAS message by the communicator 120 in response to the reception of the support information indicating that the cell C2 does not support the transmission of the paging cause information. For example, when the NAS processor 132 grasps that the cell C2 is the non-support cell, existing cell information indicating that the UE 100 exists in the non-support cell may be included in the NAS message.

For example, the NAS processor 132 transmits the NAS message by the communicator 120 in response to the reception of the support information indicating that the cell C2 supports the transmission of the paging cause information. For example, when the NAS processor 132 grasps that the cell C2 is the support cell, existing cell information indicating that the UE 100 exists in the support cell may be included in the NAS message.

When determining that the communication with the first network 200A is prioritized over the communication with the second network 200B, the NAS processor 132 may transmit a busy indicator to the AMF 221B by using a service request message as the NAS message. The busy indicator is information indicating that, in a case where the priority of communication with a network (the first network 200A) other than the second network 200B is higher than the priority of the communication with the second network 200B, the communication with the first network 200A is prioritized over the communication with the second network 200B. The busy indicator may indicate that the UE 100 is busy.

The service request message is used to change the 5GMM mode from the 5GMM-idle mode to the 5GMM-connected mode. The service request message may include a service type. The service type is an information element for identifying the purpose of the service request procedure. The service type may indicate that the UE 100 is busy.

In the present operation example, the description will be given assuming that the NAS processor 132 transmits, to the AMF 221B, the NAS message including the busy indicator and the existing cell information.

### Step S109:

The AMF 221B determines whether or not the UE 100 exists in the non-support cell. For example, the AMF 221B may determine whether or not the UE 100 exists in the non-support cell on the basis of the existing cell information. The AMF 221B may determine that the UE 100 exists in the non-support cell on the basis of the existing cell information indicating that the UE 100 exists in the non-support cell (YES). The AMF 221B may determine that the UE 100 does not exist in the non-support cell on the basis of the existing cell information indicating that the UE 100 exists in the support cell (NO). In addition, when the existing cell information is not included in the NAS message, the AMF 221B may determine that the UE 100 exists in the non-support cell (YES).

When receiving the busy indicator from the UE 100 existing in the non-support cell, the AMF 221B may consider that the UE 100 has not correctly determined the priority of the communication. Therefore, when determining that the UE 100 exists in the non-support cell, the AMF 221B may execute the process of step S110. Note that, in a case where the priority of the communication of the second network 200B is high (for example, the paging cause is a voice call) and the AMF 221B determines that the UE 100 exists in the non-support cell, the AMF 221B may execute the process of step S110.

When receiving the busy indicator from the UE 100 existing in the support cell, the AMF 221B may consider that the UE 100 can correctly determine the priority of the communication. Therefore, when determining that the UE 100 exists in the support cell, the AMF 221B may execute the process of step S111. Note that, even when determining that the UE 100 exists in the non-support cell, the AMF 221B may execute the process of step S111 in a case where the priority of the communication of the second network 200B is low (for example, the paging cause is other than a voice call).

### Step S110:

The AMF 221B transmits a paging request message to the base station 210B similarly to step S104. Note that, in a case where the UE 100 exists in the non-support cell, the AMF 221B may not include the paging cause information in the paging request message.

Thereafter, the base station 210B and the UE 100 may execute the processes similar to steps S105, S106, and S108.

### Step S111:

In response to the reception of the busy indicator, the AMF 221B stops subsequent paging to the UE 100. More specifically, the AMF 221B stops paging escalation and paging repetition.

### (2) Second operation example

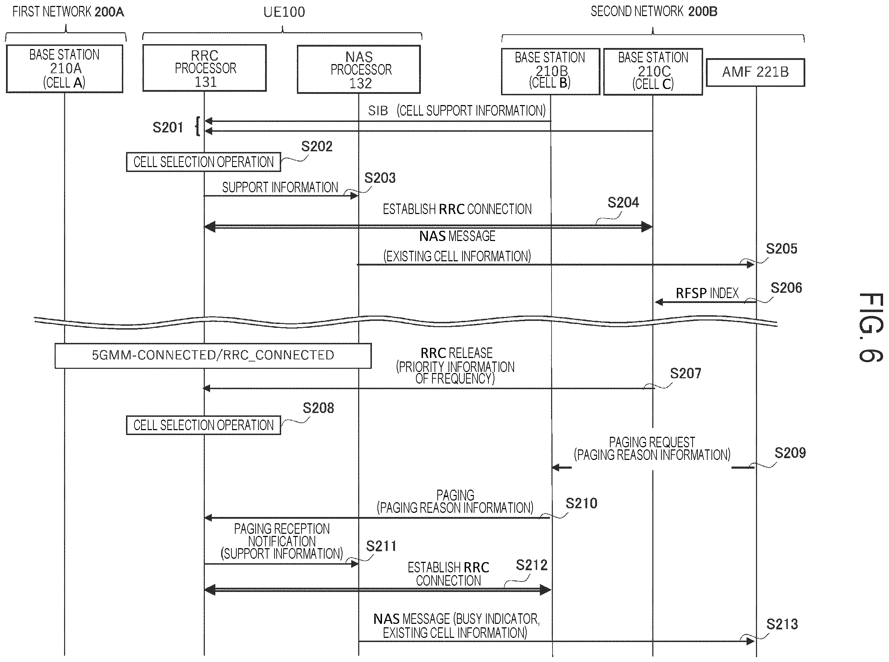

With reference to Fig. 6, a second operation example will be described focusing on differences from the above-described operation example. In the second operation example, a case will be described in which the UE 100 performs a selection operation of selecting a camp-on-cell in the second network 200B.

In the present operation example, the second network 200B includes the base station 210B and a base station 210C. Note that the UE 100 may be in the RRC connected state, the RRC idle state, or the RRC inactive state in the first network 200A.

### Step S201:

The communicator 212 of the base station 210B transmits a system information block (SIB) message by broadcast. The communicator 212 of the base station 210B transmits the SIB message via the cell C2. The communicator 120 of the UE 100 receives the SIB message from (the cell C2 of) the base station 210B.

The SIB message may include, for example, cell support information indicating whether or not a cell that is a transmission source of the SIB message supports transmission of paging cause information. Alternatively, in a case where the controller 214 of the base station 210B does not support the transmission of the paging cause information, the cell support information may not be included in the SIB message. The SIB message may be a type 1 SIB (SIB1) message, or may be another SIB message. The other SIB message may be, for example, a SIB message of a type newly defined for a UE (what is called a Multi-SIM compatible UE) that communicates with a plurality of networks by using a plurality of SIMs.

The controller 130 of the UE 100 determines, on the basis of the SIB message, whether the cell is a support cell that supports the transmission of the paging cause information or a non-support cell that does not support the transmission of the paging cause information. For example, the controller 130 of the UE 100 may determine whether the cell, which is the transmission source of the SIB message, is the support cell or the non-support cell on the basis of the cell support information. When the SIB message does not include the cell support information, the controller 130 of the UE 100 may determine that the cell is the non-support cell.

The communicator 212 of the base station 210C transmits the SIB message by broadcast, similarly to the base station 210B. The communicator 120 of the UE 100 receives the SIB message from (the cell of) the base station 210C.

In the present operation example, the description will be given assuming that the cell C2 of the base station 210C is a support cell that supports the transmission of the paging cause information, and the cell (hereinafter, appropriately referred to as a cell C3) of the base station 210C is a non-support cell that does not support the transmission of the paging cause information. Therefore, the controller 130 of the UE 100 determines that the cell C2 is the support cell on the basis of the SIB message from the cell C2, and determines that the cell C3 is the non-support cell on the basis of the SIB message from the cell C3.

Note that the controller 130 of the UE 100 may store the cell identifier and whether the cell indicated by the cell identifier is the support cell or the non-support cell. The controller 130 may determine whether or not the cell is the support cell on the basis of information stored in the past.

### Step S202:

The controller 130 (RRC processor 131) of the UE 100 performs a selection operation of selecting the camp-on-cell in the second network 200B. The RRC processor 131 measures the radio quality of one or a plurality of cells of the second network 200B before selecting the camp-on-cell.

In the selecting operation, the controller 130 preferentially selects the support cell as the camp-on-cell rather than the non-support cell. For example, the controller 130 may select a cell that is a support cell and has the best measurement result of radio quality as the camp-on-cell among one or a plurality of cells. That is, even when there is a non-support cell having a better measurement result of radio quality than a support cell, the controller 130 may select the support cell as the camp-on-cell.

In a case where none of the radio quality of support cells satisfies a predetermined criterion, the controller 130 may select a non-support cell in which the radio quality satisfies the predetermined criterion among one or a plurality of cells as the camp-on-cell. In a case where there is a plurality of non-support cells satisfying the predetermined criterion, the controller 130 may select a non-support cell having the best measurement result of the radio quality as the camp-on-cell. Note that the predetermined criterion is, for example, a cell selection criterion (Srxlev > 0 and Squal > 0).

In the present operation example, the description will be given assuming that the radio quality of the cell C2, which is the support cell, does not satisfy the cell selection criteria, and the controller 130 selects the cell C3, which is the non-support cell, as the camp-on-cell.

### Step S203:

The RRC processor 131 provides support information to the NAS processor 132.

The support information may be, for example, information regarding whether or not the cell support information indicating that a cell supports transmission of paging cause information is included in the SIB message. For example, when the cell support information indicating that the cell C3 is the non-support cell is included in the SIB message or the cell support information is not included in the SIB message, the RRC processor 131 may provide the support information indicating that the cell C3 does not support the transmission of the paging cause information to the NAS processor 132. For example, when the cell support information indicating that the cell C2 is the support cell is included in the SIB message, the RRC processor 131 may provide the support information indicating that the cell C2 supports the transmission of the paging cause information to the NAS processor 132.

### Step S204:

Step S204 is similar to step S107.

### Step S205:

When the non-support cell is selected, the NAS processor 132 may transmit, to the AMF 221B, a NAS message indicating that the UE 100 exists in the non-support cell. The AMF 221 may receive the NAS message from the UE 100. The NAS message may be a service request message or a registration request message.

Similarly to step S108, the NAS processor 132 may include existing cell information indicating that the UE 100 exists in the non-support cell in the NAS message. The AMF 221 may grasp that the UE 100 exists in the non-support cell on the basis of the existing cell information.

The NAS processor 132 may not include the existing cell information in the NAS message. The AMF 221B may grasp that the UE 100 exists in the non-support cell by the NAS message not including the existing cell information.

### Step S206:

The AMF 221B transmits a parameter (Index to RAT/Frequency Selection Priority: RSRP Index) designating a priority in the selection operation to the base station 210C. The network communicator 213 of the base station 210C receives the RSRP index from the AMF 221B.

The base station 210C generates priority information of a frequency (for example, cellReselectionPriority, cellReselectionSubPriority) on the basis of the RSRP index so that the priority of the frequency of the support cell is higher than the priority of the frequency of the non-support cell.

Thereafter, the description will be given assuming that the state of the UE 100 in the RRC layer is the RRC connected state for the first network 200A, and the mode of the UE 100 in the NAS layer is the connected mode for the first network 200A.

### Step S207:

The communicator 212 of the base station 210C transmits an RRC release message to the UE 100. The communicator 120 of the UE 100 receives the RRC release message. The RRC release message may include the priority information of the frequency generated on the basis of the RSRP index.

Note that since the RRC connection is released by the RRC release message, the state of the UE 100 in the RRC layer is the RRC idle state for the second network 200B, and the mode of the UE 100 in the NAS layer is the idle mode for the second network 200B.

### Step S208:

Similarly to step S202, the controller 130 performs a selection operation of selecting the camp-on-cell in the second network 200B. The controller 130 preferentially selects the support cell over the non-support cell on the basis of the priority information of the frequency.

In the present operation example, the description will be given assuming that the controller 130 selects the cell C2, which is the support cell, as the camp-on-cell.

### Steps S209 and S210:

Steps S209 and S210 are similar to steps S104 and S105. Note that the communicator 212 of the base station 210B transmits the paging message including the paging cause information to the UE 100 via the cell C2, which is the non-support cell.

### Steps S211 to S213:

Steps S211 to S213 are similar to steps S106 to S108. Note that since the UE 100 exists in C2, which is the support cell, paging is stopped as in step S111.

### [Other Embodiments]

In the operation of the above-described embodiment, the NAS processor 132 of the UE 100 notifies the AMF 221 whether the cell in which the UE 100 exists is the support cell or the non-support cell, but the present invention is not limited thereto. For example, the base station 210 that manages a cell that does not support the transmission of the paging cause information may notify the AMF 221 that the Multi-SIM-compatible UE 100 exists in the cell.

In the operation of the above-described embodiment, the first network 200A and the base station 210A may be replaced with the cell C1 (first cell), or the first network 200A and the base station 210A may be replaced with the cell C2 (second cell).

The steps in the operation of the above-described embodiment may not necessarily be performed in chronological order according to the order described in the flow diagram or sequence diagram. For example, the steps in the operation may be performed in an order different from the order described as the flow diagram or sequence diagram, or may be performed in parallel. In addition, some of the steps in the operation may be removed and additional steps may be added to the processing. Furthermore, each operation flow described above is not necessarily implemented separately and independently and a combination of two or more operation flows can be implemented. For example, some steps of one operation flow may be added to another operation flow, or some steps of one operation flow may be replaced with some steps of another operation flow.

A program may be provided for causing a computer to execute each processing to be performed by the UE 100 or the base station 210. The program may be recorded on a computer readable medium. By using the computer readable medium, the program can be installed in the computer. Here, the computer readable medium on which the program is recorded may be a non-transitory recording medium. The non-transitory recording medium is not particularly limited to, but may be, for example, a recording medium such as a CD-ROM (Compact Disk Read Only Memory) or a DVD-ROM (Digital Versatile Disc Read Only Memory). Furthermore, a circuit that executes each processing to be performed by the UE 100 or the base station 210 may be integrated, and at least a part of the UE 100 or the base station 210 may be configured as a semiconductor integrated circuit (chipset, SoC (system-on-chip)).

Note that, in the above-described embodiment, "transmit" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive" may mean to perform processing of at least one layer in a protocol stack used for reception, or may mean to physically receive a signal wirelessly or by wire. Alternatively, "receive" may mean a combination of performing the processing of at least one layer and physically receiving a signal wirelessly or by wire.

Although the present disclosure has been described in accordance with examples, it is understood that the present disclosure is not limited to the examples and structures. The present disclosure also includes various modifications and modifications within an equivalent range. In addition, various combinations and modes, and other combinations and modes including only one element, more elements, or less elements are also within the scope and idea of the present disclosure.

## Claims

1. A communication apparatus (100) configured to communicate with a plurality of networks (200A, 200B) by a plurality of subscriber identity modules (111, 112), the communication apparatus comprising:
a controller (130) configured to include capability information indicating capability of the communication apparatus regarding a paging cause in a registration request message; and
a transmitter (122) configured to transmit the registration request message including the capability information to a certain network (200B) included in the plurality of networks.

2. The communication apparatus according to claim 1,
wherein the capability information is used by the certain network to notify the communication apparatus of a paging cause.

3. The communication apparatus according to claim 1,
wherein the capability information indicates that the communication apparatus can grasp the paging cause by information indicating the paging cause.

4. The communication apparatus according to any one of claims 1 to 3,
wherein the controller is configured to:
include a radio resource control (RRC) processor (131) configured to perform processing in an RRC layer, and
a non-access stratum (NAS) processor (132) configured to perform processing in a NAS layer that is a layer higher than the RRC layer; and
perform control to provide, from the RRC processor to the NAS processor, support information regarding whether or not transmission of the information indicating the paging cause is supported in a cell selected by the communication apparatus.

5. The communication apparatus according to any one of claims 1 to 4,
wherein the transmitter is configured to transmit, to the certain network, a message indicating that transmission of the information indicating the paging cause is not supported in the cell selected by the communication apparatus.

6. A communication method executed by a communication apparatus configured to communicate with a plurality of networks by a plurality of subscriber identity modules, the communication method comprising the steps of:
including capability information indicating capability of the communication apparatus regarding a paging cause in a registration request message; and
transmitting the registration request message including the capability information to a certain network included in the plurality of networks.

7. A communication method executed by a mobility management apparatus (221B) of a certain network included in the plurality of networks, the communication method comprising the steps of:
receiving, from a communication apparatus configured to communicate with a plurality of networks by a plurality of subscriber identity modules, a registration request message including capability information indicating a capability of the communication apparatus regarding a paging cause; and
transmitting a message for transmitting a paging message from a base station (210B) of the network to the communication apparatus to the base station on a basis of the capability information,
the message including information indicating a cause of the paging message.
